# EUROPEAN PATENT SPECIFICATION

(11) **EP 3 639 954 B1**
(45) Date of publication and mention of the grant of the patent: **11.01.2023**
(21) Application number: 19204177.0
(22) Date of filing: 18.10.2019
(51) Int. Cl.: B22F 3/15, C22C 19/05, C22C 1/04, B22F 3/24, B22F 3/17, B22F 3/20, B22F 9/08

(54) **POWDER METALLURGY METHOD FOR PRODUCING NON-MOLYBDENUM-SEGREGATED ARTICLE**
PULVERMETALLURGISCHES VERFAHREN ZUR HERSTELLUNG EINES NICHT-MOLYBDÄN-SEGREGIERTEN ARTIKELS
PROCÉDÉ DE MÉTALLURGIE DES POUDRES POUR LA PRODUCTION D'ARTICLES SANS SÉGRÉGATION DE MOLYBDÈNE

(30) Priority: 19.10.2018 US 201862747844 P; 02.10.2019 US 201916590660
(43) Date of publication of application: 22.04.2020
(73) Proprietor: Raytheon Technologies Corporation, Farmington, CT 06032 (US)
(72) Inventor: BALES, Daniel A., Avon, CT 06001 (US); ASARE, Ted A., Glastonbury, CT 06033 (US); HAYNES, Andrew L., Glastonbury, CT 06033 (US)
(74) Representative: Dehns

(56) References cited:
- US-A1- 2018 010 216
- T. SAWADA ET AL: "Effects of Chromium and Molybdenum Contents on Properties of Ni-Cr-Mo-B Alloy with High Corrosion and wear Resistance Consolidated by HIP", FUNTAI OYOBI FUNMATSUYAKIN - JOURNAL OF THE JAPAN SOCIETY OF POWDER AND POWDER METALLURGY, vol. 59, no. 4, 15 April 2012 (2012-04-15) , pages 167-172, XP055663804, JP ISSN: 0532-8799, DOI: https://doi.org/10.2497/jjspm.59.167
- TOSHIYUKI SAWADA: "Effects of HIP Temperature on Properties of Ni-Cr-Mo-B P/M Alloy with High Corrosion and Wear Reistance", FUNTAI OYOBI FUNMATSUYAKIN - JOURNAL OF THE JAPAN SOCIETY OF POWDER AND POWDER METALLURGY, vol. 62, no. 2, 15 August 2015 (2015-08-15), pages 393-399, XP055663800, JP ISSN: 0532-8799, DOI: https://doi.org/10.2497/jjspm.62.393

## Description

### BACKGROUND

Low coefficient of thermal expansion compositions of Ni alloys may include Ni as the base metal and Mo and Cr as alloy elements. In particular, the Mo is often present in relatively high alloy amounts. The alloy is processed using a cast-wrought process to produce end-use components. First, the alloy is produced in a vacuum induction melting process and then refined into ingots using electro-slag remelting or vacuum arc remelting. The ingots are then pressed and forged to form billets. The billets may be cut and subsequently forged into the end-use components.

T. Sawada et al., J. Jpn. Soc. Powder Powder Metallurgy 2012, vol. 59, no. 4, pages 167-172 describes the effects of Cr and Mo contents on the properties of hot isostatic pressed materials formed from Ni-Cr-Mo-B powders. Toshiyuki Sawada, J. Jpn. Soc. Powder Powder Metallurgy 2015, vol. 62, no. 8, pages 393-399 describes the effects of hot isostatic pressing temperature on the properties of a material formed from Ni-Cr-Mo-B powders by hot isostatic pressing. US 2018/010216A1 discloses aluminum alloys fabricated by a rapid solidification process.

### SUMMARY

The scope of the present invention is defined by independent claim 1, and further embodiments of the invention are specified in dependent claims 2-6.

A component, e.g. an end-use component, is formed from the solid article produced by the powder metallurgy method described herein.

### BRIEF DESCRIPTION OF THE DRAWINGS

The various features and advantages of the present invention will become apparent to those skilled in the art from the following detailed description. The drawings that accompany the detailed description can be briefly described as follows.
Figure 1 depicts a powder metallurgy method for producing a non-molybdenum-segregated article.
Figure 2 depicts another example of a powder metallurgy method for producing a non-molybdenum-segregated article.

### DETAILED DESCRIPTION

In low coefficient of thermal expansion compositions of Ni alloys, the Mo is often present in relatively high alloy amounts. Molybdenum in high amounts, however, tends to segregate in high volume melts. As a result, it is difficult to employ such alloys in components because use of fabrication techniques that employ high volume melts results in Mo-segregation that leads to non-uniform properties and/or properties that are below requirements.

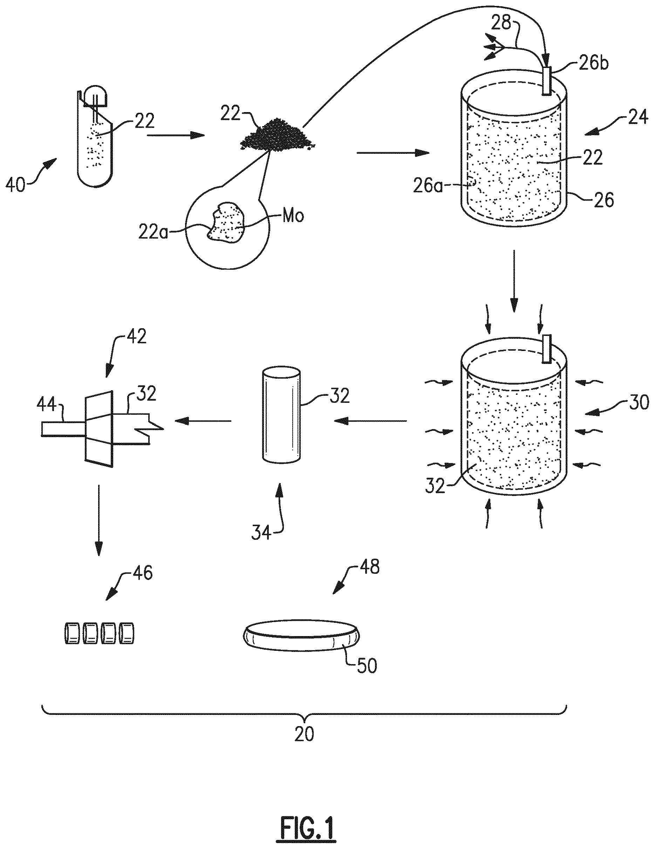

Figure 1 schematically illustrates a powder metallurgy method 20 that can be used to address segregation and produce a non-Mo-segregated article. The method 20 includes use of a Ni-Mo-Cr powder 22 that has a composition in which Ni is the base element and the Mo and the Cr are alloy elements. The composition has, by weight, 24% to 26% of the Mo and 7% to 9% of the Cr, and the Mo is dispersed in the Ni-Mo-Cr powder, as shown in the inset view of a representative particle 22a of the powder 22. The composition has up to 0.03% C, up to 0.80% Mn, up to 0.80% Si, up to 0.03% P, up to 0.015% S, up to 0.50% Al, up to 0.006% B, up to 2.00% Fe, and up to 0.50% Cu, by weight. The composition has only the elements in the amounts prescribed above, and all other elements are assumed to affect the basic and material properties of the composition for its use as a low coefficient of thermal expansion alloy, particularly in gas turbine engine applications.

The powder 22 is inserted, as shown at 24, into a canister 26. The canister 26 has a hermetic chamber 26a. For instance, the canister 26 may include metal walls that are welded or otherwise bonded together in an airtight manner to form the hermetic chamber 26a. The canister 26 may be provided with a port 26b for accessing the hermetic chamber 26a. The powder 22 may be inserted through the port 26b into the hermetic chamber 26a.

The hermetic chamber 26a is then evacuated, as represented at 28. As an example, a pump may be used to draw air or other gases out of the hermetic chamber 26a. The evacuation process may include flushing the hermetic chamber 26a with one or more inert gases, such as argon, helium, or mixtures thereof. The port 26b may subsequently be sealed off, such as by welding or the like.

The canister 26 with the metallic alloy powder 22 is then subjected at 30 to a hot isostatic pressing ("HIP") process. The HIP process includes heating the canister 26 and the metallic alloy powder 22 and applying isostatic pressure to the canister 26. The heating causes sintering and fusion of the powder 22, while the pressure deforms the canister 26 and thereby compresses the powder 22 to consolidate the powder as it fuses. The time, temperature, and pressure used may be varied in order to obtain a desired degree of consolidation and sintering. As an example, the HIP process is conducted at a pressure of 25 kilopounds per square inch, a temperature of approximately 2000°F, for a time of approximately 4 hours. The fusion and consolidation of the powder 22 forms a solid article 32. The Mo, which was dispersed in the powder 22, remains dispersed such that the solid article 32 is non-molybdenum-segregated. For instance, when in a high volume melt, the Mo can migrate or settle out and thereby produce regions that have high concentration of Mo and other regions that have low concentration of Mo. However, since sintering does not rely on entirely or substantially entirely melting, the Mo in the powder 22 remains well dispersed in the solid article 32.

As shown at 34, the canister 26 is subsequently removed from the solid article 32. As an example, the canister 26 can be removed by machining.

The powder metallurgy method 20 is not limited to the above steps or actions. For example, as also shown at 40, the method 20 may additionally include forming the powder 22. For instance, the forming may include atomization of the molten alloy. The molten alloy can be well-mixed or agitated such that the Mo is well dispersed when it is atomized. Each atomized droplet thus has well-dispersed Mo such that the powder 22 nominally has a good dispersion of the Mo.

The method 20 may also include extruding the solid article 32, as indicated at 42. For instance, the solid article 32 is pushed through a die that reduces the cross-section of the solid article 32 to produce a billet 44. As shown at 46, the billet 44 may then be cut into multiple pieces, which may also be known as stocks, blanks, mults, or slugs that are used as inputs into further processes. The stocks, blanks, mults, or slugs may then be forged, as indicated at 48, to produce one or more end-use components 50 (e.g., rotor disks). As will be appreciated, depending on the shape of the solid article 32, the extruding and/or cutting may not be necessary and the solid article 32 may be directly forged at 48 after removal of the canister in method 20.

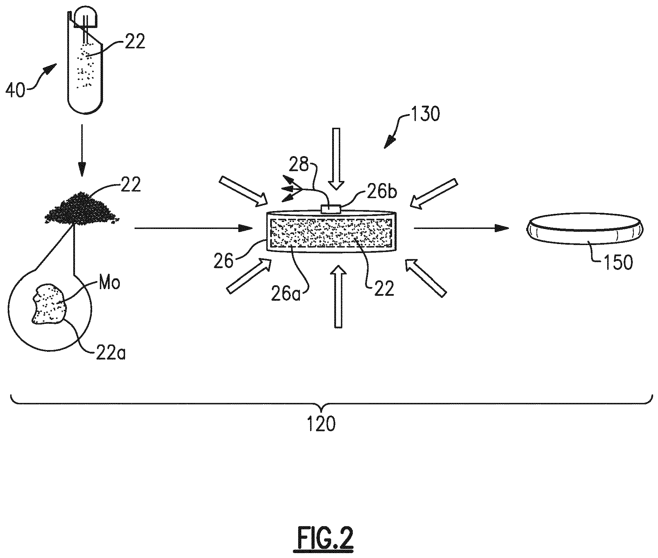

In another alternative shown in Figure 2, the method 120 is similar to the method 20 but excludes the extruding, cutting, and forging. In this example, the canister 26 with the metallic alloy powder 22 is subjected at 130 to the HIP process as described above. However, rather than forming the solid article 32 as an intermediate workpiece, the end-use component 150 is formed directly from the HIP process. Such direct HIP process may be employed, for example, in applications where components are not life limited.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A powder metallurgy method (20, 120) for producing an article, the method comprising:
inserting a Ni-Mo-Cr powder (22) into a hermetic chamber (26a) of a canister (26), the Ni-Mo-Cr powder (22) consisting of, by weight, 24-26% Mo, 7-9% Cr, up to 0.03% C, up to 0.80% Mn, up to 0.80% Si, up to 0.03% P, up to 0.015% S, up to 0.50% Al, up to 0.006% B, up to 2.00% Fe, up to 0.50% Cu, and the balance Ni; wherein the Mo is dispersed in the Ni-Mo-Cr powder, followed by evacuating the hermetic chamber (26a);
subjecting the canister (26) with the Ni-Mo-Cr powder (22) in the hermetic chamber (26a) to a hot isostatic pressing process that includes heating the canister (26) and the Ni-Mo-Cr powder (22) and applying isostatic pressure to the canister (26), the heating and the isostatic pressure causing fusion and consolidation of the Ni-Mo-Cr powder (22) to form a solid article (32), the Mo remaining dispersed; and
removing the canister (26) from the solid article (32).

2. The method as recited in claim 1, further comprising forming one or more end-use components (50, 150) from the solid article (32).

3. The method as recited in claim 2, wherein the forming of the one or more end-use components (50) includes extruding the solid article (32).

4. The method as recited in claim 2 or claim 3, wherein the forming of the one or more end-use components (50) includes cutting the solid article (32) into pieces.

5. The method as recited in any one of claims 2-4, wherein the forming of the one or more end-use components (50) includes forging the solid article (32).

6. The method as recited in any one of claims 2-5, wherein the forming of the one or more end-use components (50) includes extruding the solid article (32) into a billet (44), cutting the billet (44) into pieces, and forging the pieces.

## Patentansprüche

1. Pulvermetallurgisches Verfahren (20, 120) zur Herstellung eines Artikels, wobei das Verfahren umfasst:
Einbringen eines Ni-Mo-Cr-Pulvers (22) in eine hermetische Kammer (26a) eines Kanisters (26), wobei das Ni-Mo-Cr-Pulver (22) aus 24-26 Gew.-% Mo, 7-9 Gew.-% Cr, bis zu 0,03 Gew.-% C, bis zu 0,80 Gew.-% Mn, bis zu 0,80 Gew.-% Si, bis zu 0,03 Gew.-% P, bis zu 0,015 Gew.-% S, bis zu 0,50 Gew.-% Al, bis zu 0,006 Gew.-% B, bis zu 2,00 Gew.-% Fe, bis zu 0,50 Gew.-% Cu und der Rest aus Ni besteht; wobei das Mo in dem Ni-Mo-Cr-Pulver dispergiert ist, gefolgt vom Evakuieren der hermetischen Kammer (26a);
Unterziehen des Kanisters (26) mit dem Ni-Mo-Cr-Pulver (22) in der hermetischen Kammer (26a) einem heißisostatischen Pressprozess, der das Erhitzen des Kanisters (26) und des Ni-Mo-Cr-Pulvers (22) beinhaltet, und Aufbringen von isostatischem Druck auf den Kanister (26), wobei das Erhitzen und der isostatische Druck ein Schmelzen und Verfestigen des Ni-Mo-Cr-Pulvers (22) bewirken, um einen festen Artikel (32) zu bilden, wobei das Mo dispergiert bleibt; und
Entfernen des Kanisters (26) von dem festen Artikel (32).

2. Verfahren nach Anspruch 1, das ferner das Bilden einer oder mehrerer Endverwendungskomponenten (50, 150) aus dem festen Artikel (32) umfasst.

3. Verfahren nach Anspruch 2, wobei das Bilden der einen oder mehreren Endverwendungskomponenten (50) das Extrudieren des festen Artikels (32) beinhaltet.

4. Verfahren nach Anspruch 2 oder Anspruch 3, wobei das Bilden der einen oder mehreren Endverwendungskomponenten (50) das Schneiden des festen Artikels (32) in Stücke beinhaltet.

5. Verfahren nach einem der Ansprüche 2-4, wobei das Bilden der einen oder mehreren Endverwendungskomponenten (50) das Schmieden des festen Artikels (32) beinhaltet.

6. Verfahren nach einem der Ansprüche 2-5, wobei das Bilden der einen oder mehreren Endverwendungskomponenten (50) das Extrudieren des festen Artikels (32) zu einem Barren (44) und das Schneiden des Barrens (44) in Stücke und Schmieden der Stücke beinhaltet.

## Revendications

1. Procédé de métallurgie des poudres (20, 120) pour la production d'un article, le procédé comprenant :
l'insertion d'une poudre de Ni-Mo-Cr (22) dans une chambre hermétique (26a) d'une cartouche (26), la poudre de Ni-Mo-Cr (22) étant constituée, en poids, de 24 à 26 % de Mo, 7 à 9 % de Cr, jusqu'à 0,03 % de C, jusqu'à 0,80 % de Mn, jusqu'à 0,80 % de Si, jusqu'à 0,03 % de P, jusqu'à 0,015 % de S, jusqu'à 0,50 % d'Al, jusqu'à 0,006 % de B, jusqu'à 2,00 % de Fe, jusqu'à 0,50 % de Cu, et le reste Ni ; dans lequel le Mo est dispersé dans la poudre de Ni-Mo-Cr, suivi par l'évacuation de la chambre hermétique (26a) ;
la soumission de la cartouche (26) avec la poudre de Ni-Mo-Cr (22) dans la chambre hermétique (26a) à un processus de pressage isostatique à chaud qui comporte le chauffage de la cartouche (26) et de la poudre de Ni-Mo-Cr (22) et l'application d'une pression isostatique à la cartouche (26), le chauffage et la pression isostatique provoquant la fusion et la consolidation de la poudre de Ni-Mo-Cr (22) pour former un article solide (32), le Mo restant dispersé ; et
le retrait de la cartouche (26) de l'article solide (32).

2. Procédé selon la revendication 1, comprenant en outre la formation d'un ou plusieurs composants d'utilisation finale (50, 150) à partir de l'article solide (32).

3. Procédé selon la revendication 2, dans lequel la formation du ou de plusieurs composants d'utilisation finale (50) comporte l'extrusion de l'article solide (32).

4. Procédé selon la revendication 2 ou la revendication 3, dans lequel la formation du ou de plusieurs composants d'utilisation finale (50) comporte la découpe de l'article solide (32) en morceaux.

5. Procédé selon l'une quelconque des revendications 2 à 4, dans lequel la formation du ou de plusieurs composants d'utilisation finale (50) comporte le forgeage de l'article solide (32).

6. Procédé selon l'une quelconque des revendications 2 à 5, dans lequel la formation du ou de plusieurs composants d'utilisation finale (50) comporte l'extrusion de l'article solide (32) en une billette (44), la découpe de la billette (44) en morceaux, et le forgeage des morceaux.
